# EUROPEAN PATENT SPECIFICATION

(11) **EP 0 504 638 B1**
(45) Date of publication and mention of the grant of the patent: **20.12.1995**
(21) Application number: 92103347.8
(22) Date of filing: 27.02.1992
(51) Int. Cl.: G01C 21/20

(54) **On-vehicle navigation apparatus**
Fahrzeugnavigationsgerät
Appareil pour navigation de véhicule embarqué

(30) Priority: 18.03.1991 JP 52544/91
(43) Date of publication of application: 23.09.1992
(73) Proprietor: PIONEER ELECTRONIC CORPORATION, Meguro-ku Tokyo (JP)
(72) Inventor: Kuwahara, Shingo, c/o Pioneer Elec. Corp., Ohaza Yamada, Kawagoe-shi, Saitama (JP); Araki, Morio, c/o Pioneer Elec. Corp., Ohaza Yamada, Kawagoe-shi, Saitama (JP)
(74) Representative: Klingseisen, Franz, Dipl.-Ing.

(56) References cited:
- US-A- 4 688 244
- PATENT ABSTRACTS OF JAPAN vol. 7, no. 180 (P-215) 9 August 1983 ; & JP-A-58 083 220
- PATENT ABSTRACTS OF JAPAN vol. 15, no. 87 (P-1173) 28 February 1991 ; & JP-A-23 02 615
- PATENT ABSTRACTS OF JAPAN vol. 14, no. 358 (P-1087) 2 August 1990 ; & JP-A-21 29 797

## Description

### BACKGROUND OF THE INVENTION

### 1. Field of the Invention

The present invention relates to navigation apparatus for use on a vehicle according to the preamble of claims 1 and 3. Such navigation apparatus is known, for example, from JP-A-2 302 615 which discloses the sampling of travel locus data at every constant distance during low-speed driving and at every constant time during high-speed driving.

### 2. Description of Background Information

Today on-vehicle navigation apparatuses are in practical use, and are constructed such that map information is stored in a memory, the map information is read-out from the memory, and displayed together with the current location of a vehicle, thereby guiding the vehicle to a predetermined destination.

In general, the on-vehicle navigation apparatus displays the travel locus of the vehicle in which the navigation apparatus is mounted on the basis of information of the location of the vehicle for every given travel distance or given driving or running period of time.

If travel locus data is collected every given travel distance and a plurality of travel locus marks each showing an associated single collected travel locus are displayed on a map, a user cannot see how fast the vehicle has been driving. On the other hand, if travel locus data is collected and displayed every given traveling time, travel locus marks collected in low-speed driving conditions would be congested, making the background map difficult to see or illegible.

### OBJECT AND SUMMARY OF THE INVENTION

It is therefore an object of the present invention to provide an on-vehicle navigation apparatus which can display travel locus marks that allow a user to grasp the driving speed of a vehicle on which the apparatus is mounted as well as driving conditions, while maintaining good visibility of the background map.

This object is achieved by navigation apparatus according to claims 1 or 3.

An on-vehicle navigation apparatus according to one aspect of the present invention comprises designation means for designating different travel locus marks in accordance with passage of time between one predetermined collecting timing and a next predetermined collecting timing, read out by reading means, and display control means for showing the travel locus mark on a display screen on the basis of travel locus data read out by the reading means.

An on-vehicle navigation apparatus according to another aspect of the present invention comprises designation means for designating different travel locus marks in accordance with a traffic jam index from one predetermined collecting timing to a next predetermined collecting timing, read out by reading means, and display control means for showing the travel locus mark on a display screen on the basis of travel locus data read out by the reading means.

An on-vehicle navigation apparatus according to a preferred embodiment of the present invention comprises means for storing vehicle-location information as travel locus data in travel locus data storage means and storing a specific value as an elapsed time from one predetermined collecting timing to a next collecting timing into an elapsed time storage means when a vehicle is in a non-driving condition, designation means for designating a different travel locus mark in accordance with passage of time read out by reading means, and display control means for showing the travel locus mark on a display screen on the basis of travel locus data read out by the reading means.

An on-vehicle navigation apparatus according to another preferred embodiment of the present invention comprises means for storing vehicle-location information as travel locus data in a travel locus data storage means and storing a specific value as a traffic jam index from one predetermined collecting timing to a next collecting timing into a traffic jam index storage means when a vehicle is in a non-driving condition, designation means for designating a different travel locus mark in accordance with passage of time read out by reading means, and display control means for showing the travel locus mark on a display screen on the basis of travel locus data read out by the reading means.

The on-vehicle navigation apparatus embodying the present invention displays a different travel locus mark corresponding to the elapsed time between the time for collecting one piece of travel locus data and the time for collecting the next piece of travel locus data, the elapsed time being stored together with that travel locus data.

The on-vehicle navigation apparatus embodying the present invention displays a different travel locus mark corresponding to the traffic jam index from the time for collecting one piece of travel locus data to the time for collecting the next piece of travel locus data, the traffic jam index being stored together with that travel locus data.

### BRIEF DESCRIPTION OF THE DRAWINGS

Fig. 1 is a block diagram illustrating the structure of an on-vehicle navigation apparatus embodying the present invention;
Fig. 2 is a diagram for explaining a ring buffer which stores travel locus data;
Fig. 3 is a flowchart for explaining procedures for collecting the travel locus data according to a first embodiment of the present invention;
Fig. 4 is a diagram for explaining a ring buffer which stores travel locus data;
Fig. 5 is a flowchart for explaining procedures for collecting the travel locus data according to a second embodiment of the present invention;
Fig. 6 is a flowchart for explaining procedures for drawing the travel locus of a vehicle according to a third embodiment of the present invention;
Fig. 7 is a flowchart for explaining procedures for inserting a parking ID in elapsed time data according to the third embodiment of the present invention;
Fig. 8 is a flowchart for explaining procedures for drawing the travel locus of a vehicle according to a fourth embodiment of the present invention; and
Fig. 9 is a flowchart for explaining procedures for inserting a parking ID in traffic jam index data according to the fourth embodiment of the present invention.

### DETAILED DESCRIPTION OF THE PREFERRED EMBODIMENTS

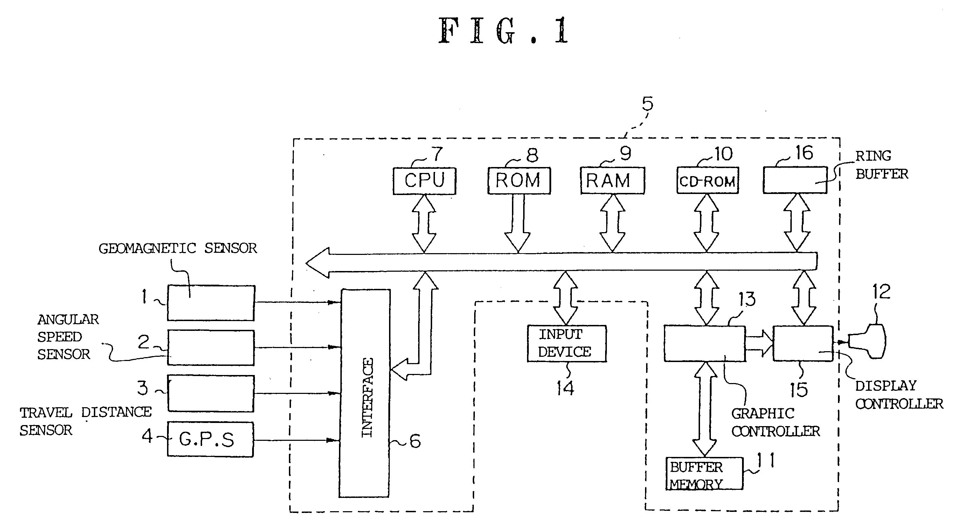

Fig. 1 illustrates an example of an on-vehicle navigation apparatus where the present invention is embodied.

As shown in the figure, a geomagnetic sensor 1 outputs direction data of a vehicle on the basis of geomagnetism (geomagnetic field). An angular speed sensor 2 detects an angular speed of the vehicle. A travel distance sensor 3 detects the traveling distance of the vehicle. A GPS (Global Positioning System) device 4 detects the current location of the vehicle in accordance with latitude and longitude information. Outputs from these sensors and device are supplied to a system controller 5.

The system controller 5 comprises an interface 6, a CPU (Central Processing Unit) 7, a ROM (Read Only Memory) 8, a RAM (Random Access Memory) 9, a recording medium 10, a buffer memory 11, a graphic controller 13 and a display controller 15. The interface 6 receives outputs from the sensors 1 to 3 and GPS device 4 to perform functions including analog-to-digital conversion. The CPU 7 executes various image data processes, and computes the driving distance and location of the vehicle on the basis of the data from the sensors 1 to 3 and GPS device 4 which are sequentially sent from the interface 6. In the ROM 8 various processing programs for the CPU 7 and other necessary information are previously stored. The RAM 9 is to be accessed so that information necessary for executing the programs is written therein or read out therefrom. The recording medium 10 comprised of a so-called CD-ROM or IC card, has digitized map information recorded thereon. The buffer memory 11, comprised of a V-RAM (Video RAM) or the like, temporarily stores image information to be immediately displayed, as a frame buffer. The graphic controller 13 writes data, such as map information, sent in response to a command from the CPU 7, into the buffer memory 11 and outputs the data as image information. The display controller 15 controls a liquid crystal display or a display 12, such as a CRT, in accordance with the image information sent from the graphic controller 13. An input device 14, constituted by a keyboard or the like, sends various commands to the system controller 5 when a user operates keys. A ring buffer 16 is a static type memory which can always hold recorded data by the power from an exclusive internal battery, even when a power switch for the entire system is turned off. The ring buffer 16 stores travel locus data.

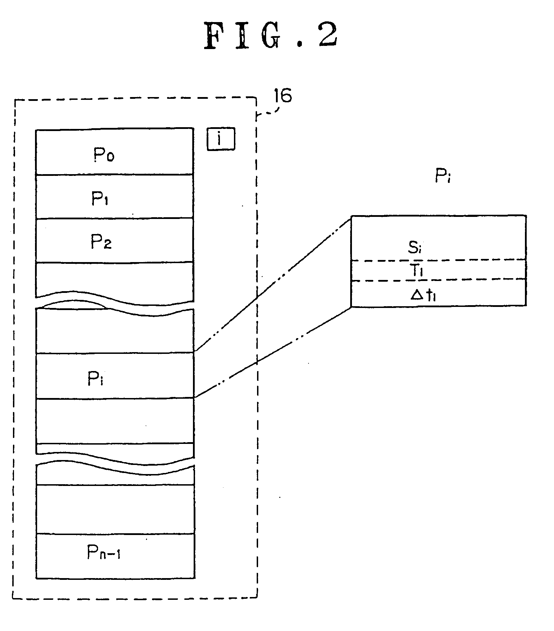

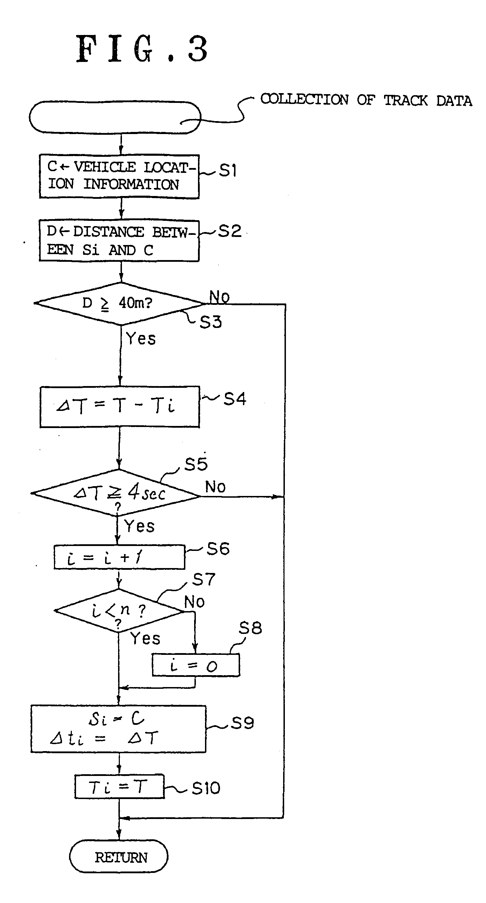

Fig. 2 shows a so-called memory map of the ring buffer 16 as an example of a storage medium for storing travel locus data of a vehicle (hereafter referred to as simply "travel locus data"). Fig. 3 is a flowchart showing the procedures which the CPU 7 executes to collect the data travel locus in cooperation with the ring buffer 16. A first embodiment will now be explained referring to Figs. 2 and 3.

In Fig. 2, the ring buffer 16 includes packets P0 to Pn-1 each as a predetermined data block. "n" means the number of packets that can be stored in the ring buffer 16. A specific packet among the packets Pi (i = 0, 1, ..., n-1) is designated by a packet number i, and predetermined packet data for that designated packet is written in or read out from the ring buffer 16. The packet number i is a pointer which directs the last packet to be written into or to be read from the ring buffer 16. When writing or reading of new data is requested and the packet number i indexes the last packet in the ring buffer 16, the packet number i is shifted to index the first packet. If otherwise, the packet number i is incremented to index the next packet.

The packet Pi secures a memory area for storing travel locus data, i.e., longitude/latitude data Si representing collecting points on the map, as well as data Δ ti of the elapsed time between the previous travel locus data collecting time and the current travel locus data collecting time, and time Ti for collecting the travel locus data. The longitude/latitude data Si and the elapsed time data Δti among the packet data to be stored in one packet serve as one piece of travel locus information at the timing for collecting the travel locus data.

In Fig. 3, when the operation moves from a main routine (not shown) to a routine for collecting travel locus data, the CPU 7 acquires longitude/latitude data C for the location of the vehicle, or the current position by the system (step S1). The CPU 7 computes a travel distance D from the previous travel locus data collecting position to the current position, on the basis of the received longitude/ latitude data C and the aforementioned longitude/latitude data Si in the last write packet Pi (step S2).

The CPU 7 then determines whether the travel distance D has reached a predetermined distance, for example, 40 meters (step S3). If the travel distance D has not reached the predetermined distance, the CPU 7 terminates the subroutine to return to the main routine. This process specifies the minimum distance required to accurately draw the travel locus of the vehicle on the map. The predetermined distance has to satisfy the specified distance when the vehicle is driving at a low speed.

As the vehicle drives, the subroutine is invoked again from the main routine to perform steps S1 and S2. When the travel distance D has reached 40 m, the CPU 7 subtracts the previous travel locus data collecting time Ti in the last write packet Pi from the current time T that the system is holding, providing an elapsed time ΔT from the previous travel locus data collecting time to the current time (step S4). The CPU 7 determines whether the elapsed time ΔT has reached a predetermined time, for example, 4 seconds (step S5). If the time ΔT has not reached 4 sec, the CPU 7 terminates the subroutine to return to the main routine. In this manner, the number of pieces of insignificant travel locus data during high-speed driving, i.e., the travel locus data to be stored in the ring buffer 16 will be reduced. When the vehicle is running at a low speed, the predetermined time has only to satisfy a travel locus data collecting time where the travel locus of the vehicle can be accurately drawn on the map.

As the vehicle drives, the subroutine is invoked again in the main routine to perform the processes in steps S1, S2, S3 and S4. When the elapsed time ΔT has reached 4 sec, the CPU 7 issues a travel locus data collecting command to the ring buffer 16, and increments the packet number i by "1" (step S6). It is determined whether the packet number i is equal to or greater than the storable number of packets n (step S7). If the packet number i is equal to or greater than n, i = 0 (step S8). It is to be noted that those steps S6, S7 and S8 are accomplished by the function of the ring buffer 16.

If the packet number i is smaller than the storable number of packets n, the longitude/latitude data C for the current point and the elapsed time ΔT in steps S1 and S4 are stored in the ring buffer 16, respectively as longitude/latitude data Si in the selected packet Pi and the data Δti of the time having elapsed from the previous travel locus data collecting time (step S9). As the longitude/latitude data Si and the elapsed time data Δti are stored in one packet specified by the packet number i in this manner, one piece of travel locus data is collected.

The current time T is stored as the current travel locus data collecting time data Ti in the specified packet Pi, together with the elapsed time data Δti (step S10). This ends the subroutine.

In this embodiment as described above, the CPU 7 determines the traveling distance from the previous travel locus data collecting position to the current position as in step S3, and the travel locus data is collected only if the travel distance has reached a predetermined distance and the time elapsed from the previous travel locus data collecting time to the current time has reached a predetermined time. As a result, the ring buffer 16 can avoid storing insignificant travel locus data during high-speed driving and can hold only valid travel locus data without losing the accuracy of the travel locus of the vehicle on the map.

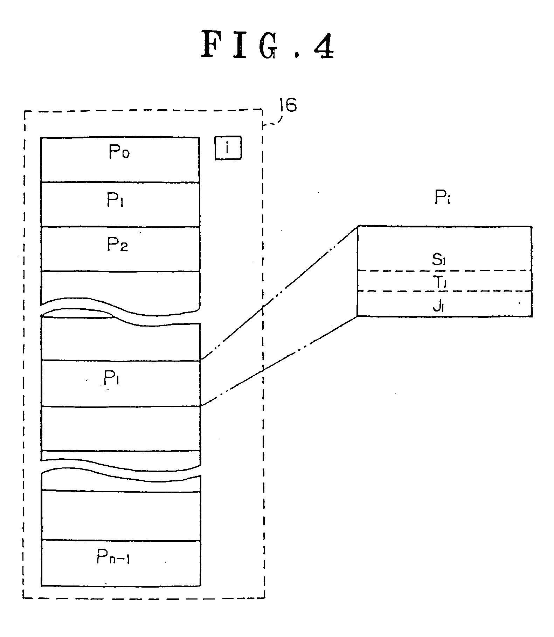

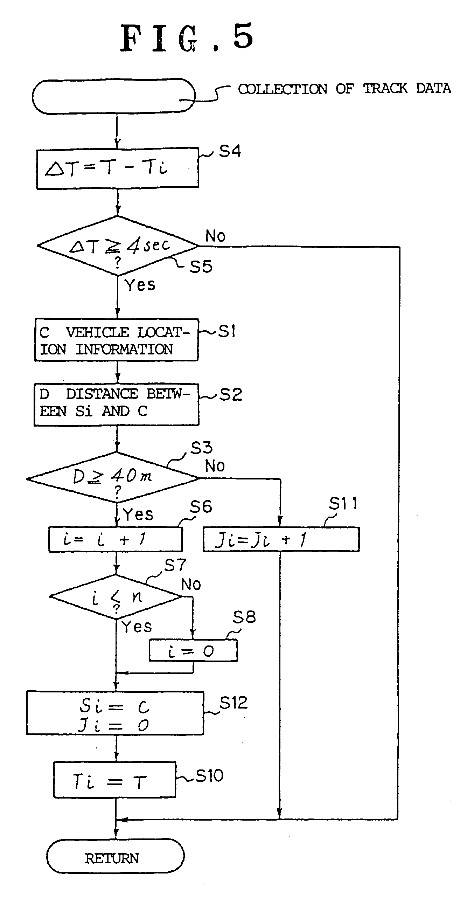

Fig. 4 shows a so-called memory map of the ring buffer 16 as an example of a storage medium for storing travel locus data. Fig. 5 is a flowchart showing a sequence of procedures which the CPU 7 executes to collect the travel locus data in cooperation with the ring buffer 16. A second embodiment will now be described referring to Figs. 4 and 5.

Like or same reference numerals and drawings as used in Fig. 2 are used in Fig. 4 to denote corresponding or identical elements to thereby avoid their redundant explanation. According to this embodiment, the memory area for the elapsed time data Δti as in Fig. 2 serves to store a traffic jam index Ji to be described later. The index Ji serves together with the longitude/latitude data Si as travel locus information.

The same reference numerals or step numbers as used in Fig. 3 are used to indicate corresponding or identical steps in Fig. 5 to avoid their detailed explanation.

First, in step S4 the CPU 7 computes an elapsed time ΔT from the previous travel locus data collecting time to the current time. The CPU 7 determines in step S5 whether the elapsed time ΔT has reached a predetermined time of 4 sec. The travel locus data can be collected at every predetermined time in this embodiment. If the time ΔT has not reached 4 sec, the CPU 7 terminates the subroutine to return to the main routine.

As the vehicle drives, the subroutine is called again in the main routine to perform the process in step S4. If the elapsed time ΔT has reached 4 sec, the flow moves to step S1. In steps S1 and S2, the CPU 7 computes the travel distance D from the previous travel locus data collecting position Si to the current location C. It is then determined in step S3 whether the travel distance D is greater or smaller than a predetermined distance of 40 m.

If the travel distance D from the previous travel locus data collecting position Si to the current position C has not reached the predetermined distance of 40 m, the CPU 7 judges that the vehicle is caught in a traffic jam, and increments the traffic jam index Ji by "1" (step S11). The packet number i at this time is held as it is when the previous travel locus data is collected. The ring buffer 16 is therefore to be accessed to update only the traffic jam index out of the previously stored packet data. The subroutine is then terminated and the flow returns to the main routine. This process reduces the number of insignificant pieces of travel locus data during driving at a low speed or in a traffic jam, i.e., the number of pieces of travel locus data to be stored in the ring buffer 16.

If the travel distance D has not reached the predetermined distance 40 meters in step S3 even though the subroutine was invoked several times from the main routine, the traffic jam index Ji associated with the previous travel locus data is incremented in step S11 each time. In accordance with
the traffic jam index Ji, the CPU 7 recognizes how low the speed is or how heavy the traffic jam is.

As the vehicle drives, the subroutine is invoked again from the main routine to perform steps S4, S5, S1, S2, and S3 one after another. If the travel distance D has reached 40 m, the CPU 7 issues a travel locus data collecting command to the ring buffer 16. The packet number i is incremented by "1" in step S6. It is determined in step S7 whether the packet number i is greater or smaller than the storable number of packets n. If the packet number i is equal to or greater than n, i = 0 in step S8.

On the basis of the new packet number i yielded in step S7 or S8, the longitude/latitude data C of the current position acquired in step S1 is treated as the longitude/latitude data Si for the travel locus data that is to be collected this time, and the traffic jam index data Ji = 0 is stored in the packet Pi (step S12). As the longitude/latitude data Si and the traffic jam index data Ji are stored in one packet specified by the packet number i in this manner, collection of one piece of travel locus data is carried out.

In step S10, the current time T is stored as the current travel locus data collecting time data Ti in the specified packet Pi, together with the traffic jam index data Ji. This ends subroutine.

According to this embodiment as described above, the CPU 7 determines the traveling time from the previous travel locus data collecting time to the current time as in step S5, and the travel locus data is collected only if the elapsed time has reached a predetermined time and the vehicle has driven a predetermined distance. As a result, it is possible to avoid storing insignificant travel locus data during low-speed driving or driving through a traffic jam in the ring buffer 16 and store only valid travel locus data there without losing the accuracy of the travel locus of the vehicle on the map.

The main routines in both the first and second embodiments have procedures to invoke subroutines for collecting individual pieces of travel locus data in good time before the predetermined distance of 40 meters is covered and the predetermined time of 4 seconds passes.

According to the first and second embodiments as described above, the current time T in collecting travel locus data is stored as the time Ti where that travel locus data is collected, together with longitude/latitude data, in the memory. It is therefore easy to acquire a traveling time between arbitrary locations on the travel locus of the moving vehicle or the location of the vehicle at any given time from the stored time Ti.

The elapsed time data Δti in the first embodiment and the traffic jam index data Ji in the second embodiment can also provide the traveling time in an arbitrary interval on the travel locus. Since the traveling time is the sum of time intervals from one point to the next point, multiplication of the elapsed times in an arbitrary interval needs to be performed. The traffic jam index data Ji is also elapsed time information which represents how long it takes for the vehicle to cover a predetermined distance after driving for a predetermined time. The traveling time can therefore be calculated in a similar manner referring to the traffic jam index data Ji.

The foregoing description of the first and second embodiments has also been given with reference to the case where in collecting the travel locus data, the collecting time Ti, and the elapsed time Δti or the traffic jam index Ji are stored together with the longitude/latitude data Si into the memory. For the purpose of simply drawing the travel locus of the moving vehicle on the map without acquiring the traveling time or the location of the vehicle, the elapsed time and the traffic jam index need not be derived.

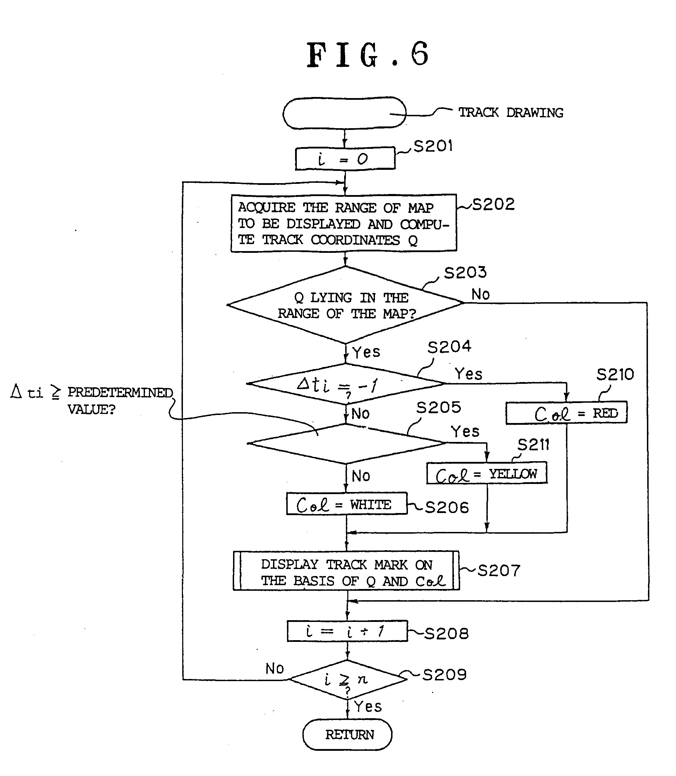

Fig. 6 presents a flowchart illustrating a routine for drawing travel locus data at the time the travel locus of a vehicle is drawn on the buffer memory 11 on the basis of the travel locus data acquired by the first embodiment, and is displayed together with map information on the display 12 via the graphic controller 13 and display controller 15. A third embodiment will now be described along this flowchart.

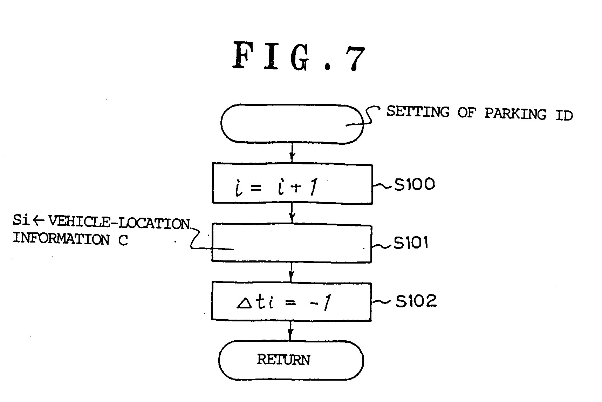

According to this embodiment the system will execute the sequence of processes shown in Fig. 7 in order to check the parking conditions of the vehicle immediately after the engine is stopped or activated. The system specifies the next packet to the last-written packet in the first embodiment (step S100), and sets the longitude/ latitude data of the current position or the information of the vehicle's location, into the longitude/latitude data Si in the specified packet (step S101). Then, a specific value indicating the deactivation or activation of the engine (hereinafter called "ID value") is set to the elapsed time Δti (step S102). This value is desirably a value which can never be attained in the processing done in the first embodiment. Assuming that Δti has a value which increase in the positive direction from zero in that processing, "-1" or other inconceivable value would be selected. When the setting of the ID value to the elapsed time Δti in the packet Pi is completed, the flow returns to the main routine.

When the flow moves from the main routine (not shown) to the routine for drawing the travel locus of the vehicle in Fig. 6, the CPU 7 first sets the packet number i to be used in this subroutine to "0" (step S201). The CPU 7 then acquires the range of the map information to be displayed from the coordinates on the display screen, and computes the travel locus coordinates Q (xi, yi) from the longitude/latitude data Si of the travel locus data specified by the packet number i to show the travel locus mark on the display screen (step S202).

Then, the CPU 7 compares the acquired range of the map information to be displayed with the travel locus coordinates Q (xi, yi) to discriminate whether the travel locus coordinates lie in the range of the map information to be displayed (step S203). When the travel locus coordinates Q (xi, yi) is out of the range of the map information to be displayed, the packet number i is incremented by "1" (step S208), and the resultant packet number i is compared with the storable number of packets n (step S209). When the packet number i is smaller than or equal to the number n, the flow returns to step S202, whereas when i exceeds n, the flow returns to the main routine.

If the travel locus coordinates Q (xi, yi) lie within the range of the map information to be displayed in step S203, it is determined whether or not the elapsed time Δti in the travel locus data specified by the packet number i is the parking ID value "-1" which has been set into the elapsed time Δti upon activation of the engine as described above (step S204). When the elapsed time Δti is "-1," the color number Col of the travel locus mark is set to red (step S210). The travel locus mark is what indicates a location on the map on the basis of the longitude/latitude data in the travel locus data, and the color number Col is to designate the display color for the travel locus mark to be displayed on the screen by the graphic controller 13, for example.

When the elapsed time Δti is not judged as "-1" in step S204, it is then compared with a predetermined value for discrimination (step S205). When Δti is equal to or greater than the predetermined value, the color number Col of the travel locus data is set to yellow (step S211). When Δti is smaller than the predetermined value, the color number Col is set to white (step S206). This predetermined value is used as a reference for discriminating if the vehicle has been driving at a low speed or in a traffic jam. This value may be set to the proper one by the system or may be properly set by the user depending on the purpose.

Through the steps S204 and S205, therefore, the driving condition at the time of collecting the travel locus data of the vehicle is discriminated, and red is designated as the color number of the travel locus mark to indicate the location where the engine is stopped while yellow and white are designed respectively to indicate driving through a traffic jam and normal driving.

And the travel locus mark is shown at the travel locus coordinates Q (xi, yi) on the display screen and the display is controlled on the basis of the specified color number (step S207).

Thereafter, every time the packet number i is incremented in step S208, a single piece of travel locus data for a single packet number will undergo the comparison with the range of the map information to be displayed, the engine stop ID value and the predetermined value. Therefore, only the travel locus data that should be displayed together with the color number will be selectively drawn until the packet number i reaches the storable number of packets n in step S209. When i reaches n, the CPU 7 terminates this subroutine and returns to the main routine.

According to this embodiment, the elapsed time Δti of the travel locus data in the first embodiment is used as a parameter to display the travel locus mark in different colors according to the individual driving conditions. This display technique permits the user to see the previous driving conditions from the travel locus marks indicated by different colors. In the case of the so-called non-driving condition, such as upon activation or deactivation of the engine, a specific value is stored as the elapsed time Δti and is displayed with a specific travel locus mark, thus allowing the user to find out an unusual point on the travel locus.

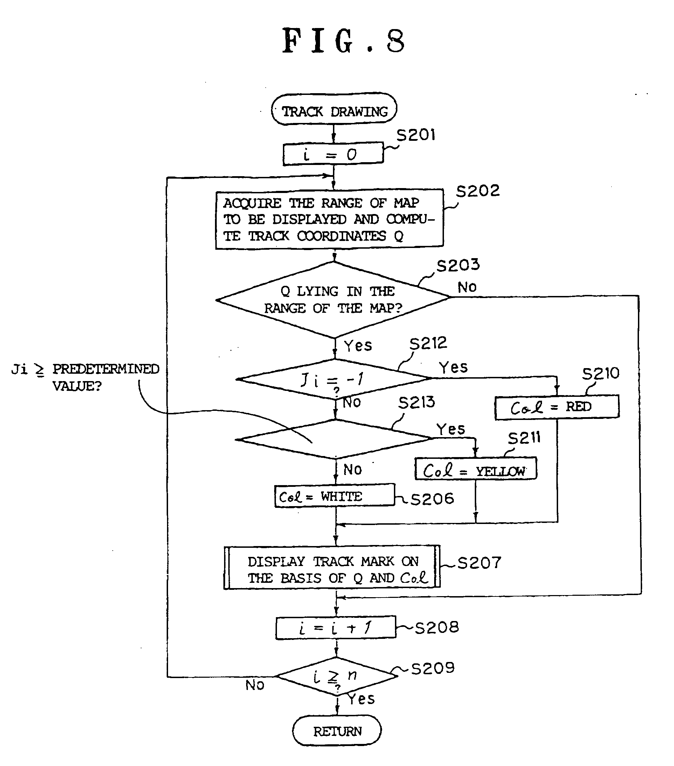

Fig. 8 presents a flowchart for explaining a routine for drawing the travel locus of a vehicle as per the third embodiment of the present invention. On the basis of this flowchart, a fourth embodiment will be described. The same reference numerals or step numbers as used in Fig. 6 are used to indicate corresponding or identical steps in Fig. 8 to thereby eliminate their detailed explanation.

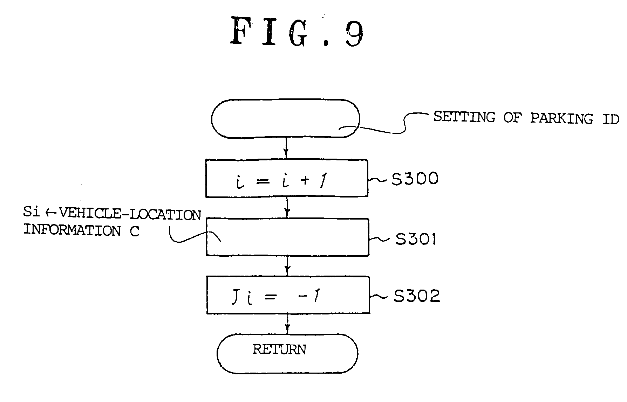

According to this embodiment the system will execute the sequence of processes shown in Fig. 9 in order to check the parking conditions of the vehicle immediately after the engine is stopped or activated. The system specifies the next packet to the last-written packet in the second embodiment (step S300), and sets the longitude/latitude data of the current position or the information of the vehicle's location, C, into the longitude/latitude data Si in the specified packet (step S301). Then, an ID value indicating the deactivation or activation of the engine is set to the traffic jam index Ji (step S302). When the setting of the ID value to the traffic jam index Ji in the packet Pi is completed, the flow returns to the main routine.

When the flow moves from the main routine to the routine for drawing the travel locus of the vehicle in Fig. 8, the CPU 7 first sets the packet number i to be used in this subroutine to "0" in step S201, and then acquires the range of the map information to be displayed and computes the travel locus coordinates Q (xi, yi) from the longitude/latitude data Si specified by the packet number i in step S202.

Then, the CPU 7 compares the range of the map information to be displayed with the travel locus coordinates Q (xi, yi) in step S203. When the travel locus coordinates Q (xi, yi) is out of the range of the map information to be displayed, the flow then advances to a sequence of steps S208 and S209 which will be executed in the same way as done in the third embodiment.

If the travel locus coordinates Q (xi, yi) lie within the range of the map information to be displayed in step S203, it is determined whether or not the traffic jam index Ji specified by the packet number i is the ID value "-1" which has been set into the traffic jam index Ji upon activation of the engine as described above (step S212). When the traffic jam index Ji is "-1," the color number Col of the travel locus mark is set to red in step S210.

When the traffic jam index Ji is not "-1" in step S212, it is then compared with a predetermined value, for example, "0" (step S213). When the traffic jam index Ji is equal to or greater than the predetermined value, the color number Col of the travel locus data is set to yellow in step S211. When the traffic jam index Ji is smaller than the predetermined value, the color number Col is set to white in step S206. This predetermined value is used as a reference for discriminating if the vehicle has been driving at a low speed or has been in a traffic jam. This value may be set to the proper one by the system or may be properly set by the user depending on the purpose. If the predetermined value is set to "0" as in this embodiment, it is apparent that the value of the travel distance D, 40 m, at which the traffic jam index will be incremented every given time in the above-described second embodiment, is a reference to indicate a traffic jam.

Through the steps S212 and S213, therefore, the driving condition at the time of collecting the travel locus data of the vehicle is discriminated, and red is designated as the color number of the travel locus mark to indicate the location where the engine is stopped while yellow and white are designed respectively to indicate driving through a traffic jam and normal driving.

In step S207, the travel locus mark is shown at the travel locus coordinates Q (xi, yi) on the display screen and the display is controlled on the basis of the specified color number Col.

Thereafter, every time the packet number i is incremented in step S208, a single piece of travel locus data for a single packet number will undergo the comparison with the range of the map information to be displayed, the engine stop ID value and the predetermined value. Therefore, only the travel locus data that should be displayed together with the color number will be selectively drawn until the packet number i reaches the storable number of packets n in step S209. When i reaches n, the CPU 7 terminates this subroutine and returns to the main routine.

According to this embodiment, the traffic jam index Ji of the travel locus data in the second embodiment is used as a parameter to display the travel locus mark in different colors according to the individual driving conditions. This display technique permits the user to see the previous driving conditions from the travel locus marks indicated by different colors. In the case of the so-called non-driving condition, such as upon activation or deactivation of the engine, a specific value is stored as the traffic jam index Ji and is displayed with a specific travel locus mark, thus allowing the user to find out an unusual point on the travel locus.

Although the foregoing description of the third and fourth embodiments has been given with reference to the case where the driving conditions of the vehicle are displayed by designating different colors to the color number of the travel locus mark, this invention is not limited to this display technique. For instance, the driving conditions may be indicated by altering the shape of the travel locus mark. Further, the driving conditions need not be restricted to the three states, namely, parking, driving through a traffic jam and normal driving. More specific driving conditions may of course be indicated by classifying in more detail the elapsed time or the traffic jam index.

Moreover, classification of the driving conditions may be done without using the elapsed time. Namely, in the case where the collecting time Ti is stored together with the longitude/latitude data as in the first and second embodiments, if the elapsed time from the time for collecting one piece of travel locus data to the time for collecting the next piece of travel locus data is computed each time and the acquired elapsed time is discriminated, the classified display of the driving conditions, like the one described previously, can apparently be accomplished though the processing speed will be slightly slower.

Further in the embodiments, travel locus information is stored in a ring buffer, and travel locus data is held in one packet. The storage means is not limited to this particular type, and it may be accomplished by a memory having the function of an ordinary RAM. As long as the collecting time Ti, the elapsed time Δti and the traffic jam index Ji can be associated with the longitude/latitude data stored at the same collecting timing, these pieces of data need not be stored in the same packet.

The non-driving condition is not limited to the point of the activation or deactivation of the engine of the vehicle, but the case where the travel distance does not increase even when a specific period of time has elapsed or such a specific period of time has elapsed with no increase in travel distance may also be considered as the non-driving condition. In this case no parking ID is required and only the elapsed time data or traffic jam index data is sufficient to check the non-driving condition.

According to the present invention, as described above, the travel locus of a vehicle is displayed with different travel locus marks in accordance with the driving conditions on the basis of the collecting time stored together with travel locus data, or the elapsed time or traffic jam index from the previous travel locus data collecting time to the current travel locus data collecting time, thus permitting the user to visually grasp the driving speed and driving conditions without losing the good visibility of the background map.

## Claims

1. A navigation apparatus for use on a vehicle comprising:
means (1, 2, 3, 4) for generating current location information of said vehicle;
means for generating current time information; means (16, Pᵢ) for storing said current location information (C) of said vehicle as travel locus data (Sᵢ) and said current time information (T) as collecting time data;
means (S2) for computing a travel distance (D) from a previous locus data collecting position on the basis of said current location information (C) of said vehicle and said travel locus data (Sᵢ);
first judging means (S3) for judging whether said travel distance (D) computed by said travel distance computing means (S2) has reached a predetermined distance or not;
means (S4) for computing an elapsed time (Δt) from previous locus data collecting time to the current time on the basis of the current time information (T) and the collecting time data (Tᵢ);
means (S4) for storing said elapsed time (Δt) computed by said elapsed time computing means;
second judging means (S5) for judging whether said elapsed time (Δt) stored by said elapsed time storage means has reached a predetermined time or not;
means (S10) for generating a collecting timing (Tᵢ), if it is judged that said locus distance (D) has reached said predetermined distance by said first judging means (S3) and that said elapsed time (Δt) has reached said predetermined time by said second judging means (S5);
**characterized by**
means (S10, S12) for instructing said travel locus data storage means (16) to store said travel locus data (Sᵢ) in response to said collecting timing (Tᵢ);
means (S202) for reading out said travel locus data and said elapsed time respectively from said travel locus data storage means and said elapsed time storage means;
means (S203) for designating different travel locus marks in accordance with said elapsed time read out by said reading means; and
display control means (15) for showing said travel locus marks on a display screen (12) on the basis of the travel locus data read out by said reading means.

2. A navigation apparatus according to claim 1,
characterized by further comprising:
means (S101) for storing said vehicle-location information (C) as travel locus data (Sᵢ) in said travel locus data storage means (16) and storing a specific value ("-1") as said elapsed time (Δtᵢ) into said elapsed time storage means when the vehicle is in a non-driving condition.

3. A navigation apparatus for use on a vehicle comprising:
means (1, 2, 3, 4) for generating current location information of said vehicle;
means for generating current time information; means (16, Pᵢ) for storing said current location information (C) of said vehicle as travel locus data (Sᵢ) and said current time information (T) as collecting time data;
means (S2) for computing a travel distance (D) from a previous locus data collecting position on the basis of said current location information (C) of said vehicle and said travel locus data (Sᵢ);
first judging means (S3) for judging whether said travel distance (D) computed by said travel distance computing means (S2) has reached a predetermined distance or not;
means (S4) for computing an elapsed time (Δt) from previous locus data collecting time to the current time on the basis of the current time information (T) and the collecting time data (Tᵢ);
means (S4) for storing said elapsed time (Δt) computed by said elapsed time computing means;
second judging means (S5) for judging whether said elapsed time (Δt) stored by said elapsed time storage means has reached a predetermined time or not;
means (S10) for generating a collecting timing (Tᵢ), if it is judged that said locus distance (D) has reached said predetermined distance by said first judging means (S3) and that said elapsed time (Δt) has reached said predetermined time by said second judging means (S5);
**characterized by**
means (S10, S12) for instructing said travel locus data storage means (16) to store said travel locus data (Sᵢ) in response to said collecting timing (Tᵢ);
means (S11) for storing a traffic jam index (Jᵢ) from said collecting timing for one piece of travel locus data to a next collecting timing for a next piece of travel locus data.
means (S202) for reading out the travel locus data and said traffic jam index respectively from said travel locus data storage means and said traffic jam index storage means;
means (S203) for designating different travel locus marks in accordance with said traffic jam index read out by said readout means; and
display control means (15) for showing said travel locus marks on a display screen (12) on the basis of the travel locus data read out by said reading means.

4. A navigation apparatus according to claim 3,
characterized by further comprising:
means (S101) for storing said vehicle-location information (C) as travel locus data (Sᵢ) in said travel locus data storage means (16) and storing a specific value ("-1") as said traffic jam index (Jᵢ) into said traffic jam index storage means when the vehicle is in a non-driving condition.

## Patentansprüche

1. Navigationsgerät zum Gebrauch in einem Fahrzeug, welches umfaßt:
Mittel (1, 2, 3, 4) zum Erzeugen einer Information über den gegenwärtigen Ort eines Fahrzeugs;
Mittel zum Erzeugen einer Information über die gegenwärtige Zeit; eine Einrichtung (16, Pᵢ) zum Speichern der Information (C) über den gegenwärtigen Ort des Fahrzeugs als Reiseortskurvendaten (Sᵢ) und der Information (T) über die gegenwärtige Zeit als Erfassungszeitdaten;
Mittel (S2) zum Berechnen einer Reisedistanz (D) von einer vorhergehenden Position des Erfassens von Ortskurvendaten auf der Basis der Information (C) über den gegenwärtigen Ort des Fahrzeugs und der Reiseortskurvendaten (Sᵢ);
erste Entscheidungsmittel (S3) zum Entscheiden, ob die von den Reisedistanzberechnungsmitteln (S2) berechnete Reisedistanz eine festgelegte Distanz erreicht hat oder nicht;
Mittel (S4) zum Berechnen einer verstrichenen Zeit (Δt) von der vorhergehenden Zeit des Erfassens von Ortskurvendaten bis zur gegenwärtigen Zeit auf der Basis der Information über die gegenwärtige Zeit (T) und die Erfassungszeitdaten (Tᵢ);
eine Einrichtung (S4) zum Speichern der von den Berechnungsmittelnfür die verstrichene Zeit berechneten verstrichenen Zeit (Δt);
zweite Entscheidungsmittel (S5) zum Entscheiden, ob die von der Speichereinrichtung für die verstrichene Zeit gespeicherte verstrichene Zeit (Δt) einen festgelegten Wert erreicht hat oder nicht;
Mittel (S10) zum Erzeugen einer Erfassungszeitaufnahme (Tᵢ), wenn von den ersten Entscheidungsmitteln (S3) entschieden wird, daß die Ortskurvendistanz (D) die festgelegte Distanz erreicht hat, und von den zweiten Entscheidungsmitteln (S5), daß die verstrichene Zeit (Δt) die festgelegte Zeit erreicht hat;
gekennzeichnet durch:
Mittel (S10, S12) um die Speichereinrichtung (16) für Reiseortskurvendaten anzuweisen, die Reiseortskurvendaten (Sᵢ) in Antwort auf die Erfassungszeitaufnahme (Tᵢ) zu speichern;
Mittel (S202) zum Auslesen der Reiseortskurvendaten und der verstrichenen Zeit aus der Speichereinrichtung für Reiseortskurvendaten bzw. der Speichereinrichtung für die verstrichene Zeit;
Mittel (S203) zum Kennzeichnen verschiedener Reiseortskurvenmarkierungen entsprechend der von den Lesemitteln ausgelesenen verstrichenen Zeit; und
Anzeigensteuerungsmittel (15), um die Reiseortskurvenmarkierungen auf einem Anzeigeschirm (12) auf der Basis der von den Lesemitteln ausgelesenen Reiseortskurvendaten zu zeigen.

2. Navigationsgerät nach Anspruch 1, dadurch gekennzeichnet, daß es weiterhin umfaßt:
Mittel (S101) zum Speichern der Information über den Fahrzeugort (C) als Reiseortskurvendaten (Sᵢ) in der Speichereinrichtung (16) für Reiseortskurvendaten und Speichern eines spezifischen Werts ("-1") als die verstrichene Zeit (Δtᵢ) in der Speichereinrichtung für die verstrichene Zeit, wenn das Fahrzeug sich in einen Zustand des Nicht-Fahrens befindet.

3. Navigationsgerät zum Gebrauch in einem Fahrzeug, welches umfaßt:
Mittel (1, 2, 3, 4) zum Erzeugen einer Information über den gegenwärtigen Ort eines Fahrzeugs;
Mittel zum Erzeugen einer Information über die gegenwärtige Zeit; eine Einrichtung (16, Pᵢ) zum Speichern der Information (C) über den gegenwärtigen Ort des Fahrzeugs als Reiseortskurvendaten (Sᵢ) und der Information (T) über die gegenwärtige Zeit als Erfassungszeitdaten;
Mittel (S2) zum Berechnen einer Reisedistanz (D) von einer vorhergehenden Position des Erfassens von Ortskurvendaten auf der Basis der Information (C) über den gegenwärtigen Ort des Fahrzeugs und der Reiseortskurvendaten (Sᵢ);
erste Entscheidungsmittel (S3) zum Entscheiden, ob die von den Reisedistanzberechnungsmitteln (S2) berechnete Reisedistanz eine festgelegte Distanz erreicht hat oder nicht;
Mittel (S4) zum Berechnen einer verstrichenen Zeit (Δt) von der vorhergehenden Zeit des Erfassens von Ortskurvendaten bis zur gegenwärtigen Zeit auf der Basis der Information über die gegenwärtige Zeit (T) und die Erfassungszeitdaten (Tᵢ);
eine Einrichtung (S4) zum Speichern der von den Berechnungsmittelnfür die verstrichene Zeit berechneten verstrichenen Zeit (Δt);
zweite Entscheidungsmittel (S5) zum Entscheiden, ob die von der Speichereinrichtung für die verstrichene Zeit gespeicherte verstrichene Zeit (Δt) einen festgelegten Wert erreicht hat oder nicht;
Mittel (S10) zum Erzeugen einer Erfassungszeitaufnahme (Tᵢ), wenn von den ersten Entscheidungsmitteln (S3) entschieden wird, daß die Ortskurvendistanz (D) die festgelegte Distanz erreicht hat, und von den zweiten Entscheidungsmitteln (S5), daß die verstrichene Zeit (Δt) die festgelegte Zeit erreicht hat;
gekennzeichnet durch:
Mittel (S10, S12) um die Speichereinrichtung (16) für Reiseortskurvendaten anzuweisen, die Reiseortskurvendaten (Sᵢ) in Antwort auf die Erfassungszeitaufnahme (Tᵢ) zu speichern;
eine Einrichtung (S11) zum Speichern eines Verkehrsstauindex (Jᵢ) von der Erfassungszeitaufnahme für ein Reiseortskurvendatenstück bis zu einer nächsten Erfassungszeitaufnahme für ein nächstes Reiseortskurvendatenstück;
Mittel (S202) zum Auslesen der Reiseortskurvendaten und des Verkehrsstauindex aus der Speichereinrichtung für Reiseortskurvendaten bzw. der Speichereinrichtung für den Verkehrsstauindex;
Mittel (S203) zum Kennzeichnen verschiedener Reiseortskurvenmarkierungen entsprechend dem von den Lesemitteln ausgelesenen Verkehrsstauindex; und
Anzeigensteuerungsmittel (15), um die Reiseortskurvenmarkierungen auf einem Anzeigeschirm (12) auf der Basis der von den Lesemitteln ausgelesenen Reiseortskurvendaten zu zeigen.

4. Navigationsgerät nach Anspruch 3, dadurch gekennzeichnet,
daß es weiterhin umfaßt:
eine Einrichtung (S101) zum Speichern der Information über den Fahrzeugort (C) als Reiseortskurvendaten (Sᵢ) in der Speichereinrichtung (16) für Reiseortskurvendaten und Speichern eines spezifischen Werts ("-1") als Verkehrsstauindex (Jᵢ) in der Speichereinrichtung für den Verkehrsstauindex, wenn das Fahrzeug sich in einem Zustand des Nicht-Fahrens befindet.

## Revendications

1. Appareil de navigation à utiliser à bord d'un véhicule, comprenant:
un moyen (1, 2, 3, 4) pour générer une information de position instantanée dudit véhicule;
un moyen pour générer une information d'instant immédiat;
un moyen (16, Pᵢ) pour stocker ladite information (C) de position instantanée dudit véhicule en tant que donnée (Sᵢ) de point de parcours et ladite information (T) d'instant immédiat en tant que donnée d'instant de collecte;
un moyen (S₂) pour calculer une distance parcourue (D) à partir d'une position de collecte précédente de donnée de point à partir de ladite information (C) de position instantanée dudit véhicule et à partir de ladite donnée (Sᵢ) de point de parcours;
un premier moyen de jugement (S3) pour déterminer si ladite distance parcourue (D) calculée par ledit moyen (S2) de calcul de distance parcourue a ou n'a pas atteint une valeur prédéterminée;
un moyen (S4) pour calculer un temps écoulé (Δt) depuis l'instant de la collecte précédente de donnée de point jusqu'à l'instant immédiat à partir de l'information (T) d'instant immédiat et de la donnée (Tᵢ) d'instant de collecte;
un moyen (S4) pour stocker ledit temps écoulé (Δt) calculé par ledit moyen de calcul de temps écoulé;
un second moyen de jugement (S5) pour déterminer si ledit temps écoulé (Δt) stocké par ledit moyen de stockage de temps écoulé a ou n'a pas atteint une durée prédéterminée;
un moyen (S10) pour générer un instant de collecte (Ti), s'il est déterminé par ledit premier moyen de jugement (S3) que ladite distance parcourue (D) a atteint ladite valeur prédéterminée et s'il est déterminé par le second moyen de jugement (S5) que ledit temps écoulé (Δt) a atteint ladite durée prédéterminée:
**caractérisé par**
un moyen (S10, S12) pour demander audit moyen (16) de stockage de donnée de point de parcours de stocker ladite donnée (Sᵢ) de point de parcours en réponse audit instant de collecte (Tᵢ);
un moyen (S202) pour extraire ladite donnée de point de parcours et ledit temps écoulé respectivement dudit moyen de stockage de donnée de point de parcours et dudit moyen de stockage de temps écoulé;
un moyen (S203) pour désigner différents repères de point de parcours en fonction dudit temps écoulé extrait par ledit moyen de lecture; et
un moyen de commande d'affichage (15) pour présenter lesdits repères de point de parcours sur un écran d'affichage (12) en fonction de la donnée de point de parcours extraite par ledit moyen de lecture.

2. Appareil de navigation selon la revendication 1, caractérisé en ce qu'il comprend en outre:
un moyen (S101) pour stocker ladite information (C) de localisation de véhicule en tant que donnée (Sᵢ) de point de parcours dans ledit moyen de stockage (16) de donnée de point de parcours et pour stocker dans ledit moyen de stockage de temps écoulé une valeur spécifique ("-1") en tant que temps écoulé (Δtᵢ) lorsque le véhicule est en état de non-circulation.

3. Appareil de navigation à utiliser à bord d'un véhicule, comprenant:
un moyen (1, 2, 3, 4) pour générer une information de position instantanée dudit véhicule;
un moyen pour générer une information d'instant immédiat; un moyen (16, Pᵢ) pour stocker ladite information (C) de position instantanée dudit véhicule en tant que donnée (Sᵢ) de point de parcours et ladite information (T) d'instant immédiat en tant que donnée d'instant de collecte;
un moyen (S2) pour calculer une distance parcourue (D) depuis une position de collecte précédente de donnée de point à partir de ladite information (C) de localisation instantanée dudit véhicule et à partir de ladite donnée (Sᵢ) de point de parcours;
un premier moyen de jugement (S3) pour déterminer si ladite distance parcourue (D) calculée par ledit moyen (S2) de calcul de distance parcourue a ou n'a pas atteint une valeur prédéterminée;
un moyen (S4) pour calculer un temps écoulé (Δt) depuis l'instant de la collecte précédente de donnée de point jusqu'à l'instant immédiat à partir de l'information (T) d'instant immédiat et de la donnée (Tᵢ) d'instant de collecte;
un moyen (S4) pour stocker ledit temps écoulé (Δt) calculé par ledit moyen de calcul de temps écoulé;
un second moyen de jugement (S5) pour déterminer si ledit temps écoulé (Δt) stocké par ledit moyen de stockage de temps écoulé a ou n'a pas atteint une durée prédéterminée;
un moyen (S10) pour générer un instant de collecte (Ti), s'il est déterminé par ledit premier moyen de jugement (S3) que ladite distance parcourue (D) a atteint ladite valeur prédéterminée et s'il est déterminé par le second moyen de jugement (S5) que ledit temps écoulé (Δt) a atteint ladite durée prédéterminée:
**caractérisé par**
un moyen (S10, S12) pour demander audit moyen (16) de stockage de donnée de point de parcours de stocker ladite donnée (Sᵢ) de point de parcours en réponse audit instant de collecte (Tᵢ);
un moyen (S11) pour stocker un indicateur (Jᵢ) d'embouteillage depuis ledit instant de collecte pour une donnée de point de parcours jusqu'à un instant suivant de collecte pour une donnée suivante de point de parcours;
un moyen (S202) pour extraire la donnée de point de parcours et ledit temps écoulé respectivement dudit moyen de stockage de donnée de point de parcours et dudit moyen de stockage de temps écoulé;
un moyen (S203) pour désigner différents repères de point de parcours en fonction dudit temps écoulé extrait par ledit moyen de lecture; et
un moyen de commande d'affichage (15) pour présenter lesdits repères de point de parcours sur un écran d'affichage (12) en fonction de la donnée de point de parcours extraite par ledit moyen de lecture.

4. Appareil de navigation selon la revendication 3, caractérisé en ce qu'il comprend en outre:
un moyen (S101) pour stocker ladite information (C) de localisation de véhicule en tant que donnée (Sᵢ) de point de parcours dans ledit moyen de stockage (16) de donnée de point de parcours et pour stocker dans ledit moyen de stockage d'indicateur d'embouteillage une valeur spécifique ("-1") en tant que dit indicateur (Jᵢ) d'embouteillage lorsque le véhicule est en état de non-circulation.
